# EUROPEAN PATENT SPECIFICATION

(11) **EP 0 581 746 B1**
(45) Date of publication and mention of the grant of the patent: **04.12.1996**
(21) Application number: 93830320.3
(22) Date of filing: 22.07.1993
(51) Int. Cl.: B60J 7/08, B60J 7/043, B60J 7/053

(54) **Movable transparent panel structure to close the roof of an automobile**
Bewegbare, durchsichtige Deckelstruktur um ein Kraftfahrzeugdach zu verschliessen
Panneau avec structure amovible transparente pour fermer un toit de automobile

(30) Priority: 28.07.1992 IT RM920577
(43) Date of publication of application: 02.02.1994
(73) Proprietor: SOCIETA' ITALIANA VETRO- SIV-SpA, 66050 San Salvo (Chieti) (IT)
(72) Inventor: De Lena, Oscar, I-86039 Termoli CB (IT)
(74) Representative: Bazzichelli, Alfredo

(56) References cited:
- EP-A- 0 076 218
- EP-A- 0 238 164
- EP-A- 0 307 280
- EP-A- 0 411 879

## Description

The present invention relates to a panel for automobiles, and in particular to a panel made of glass or transparent plastic material.

A panel of this type is commonly known as a sun roof, and for preference replaces that part of the metal roof above the front seats.

The panel is made of glass or other transparent material and has a light and energy transmission factor not exceeding 25% of the incident energy, so as to avoid unpleasant irradiation on the inside. By light and energy transmission factor, the flow of light or energy directly transmitted through the glass is intended.

In order to obtain the above characteristics, sun roofs are generally made of glass having a thickness of between 3 and 5 mm, provided with suitable silk-screen coatings and/or thin reflective layers.

By the use of these opening sun roofs in automobiles it is possible to increase comfort, in particular during the hotter months of the year, thanks to the improved circulation of air within the interior of the vehicle.

However, there are certain problems during the colder months of the year, when the high level of humidity and the cold outside cause misting of the inner surface. Furthermore, the difference in temperature between the inside and the outside of the vehicle generates an unpleasant feeling of cold at the level of the occupants' heads.

In order to avoid the above problems, sliding false roofs made of the same materials as the inside upholstery are at present installed in the roofs of automobiles, which act as a screen separating the transparent sun roof from the rest of the interior during the colder months.

Use of said false roof is sometimes advisable even during summer months, in particular in the presence of extremely strong sunshine.

It can be appreciated that the production and assembly of the above false roof is the case of additional costs.

EP-A-0 076 218 disclose a conventional one layer movable panel of transparent glass or plastic sheet material assembled in an aperture of an automobile.

EP-A-0 307 280 discloses a double glazing slideable panel for a vehicle door.

Object of the present invention is therefore to eliminate said false roof, thus reducing the overall manufacturing costs of an automobile provided with an opening sun roof.

A further object of the present invention is that of providing a transparent sun roof having characteristics of improved comfort for passengers, during both the winter and the summer months.

In order to attain said objects, the transparent sun roof is made of double-glazing, using two sheets of glass separated by an air gap which is carefully sealed so as to prevent humidity from entering between the sheets of glass.

Furthermore, the sun roof manufactured as above has for preference on one or more of its surfaces reflecting and/or opaque surfaces so as to obtain extremely low transmission levels.

The sun roof also has solutions for its anchorage to the metal structure of the automobile, on the one hand in order to guarantee the best possible seal against the entry of external currents of air into the interior, and on the other hand so as not to endanger the insulation characteristics obtained.

thus be said that, in the field of sun roofs for automobiles, a new product has been obtained.

The advantages obtained from use of this product are the following: increased comfort within the interior of the vehicle, both during the warmer months and during the colder ones; increased passive safety with respect to sun roofs made using a single sheet of glass; elimination of misting on the surface closest to the heads of the occupants; the possibility of obtaining with greater versatility a number of characteristics, using different surface treatments on the four surfaces of the two sheets of glass available; in contrast, only two surfaces (an internal and an external one) are available at present in opening sun roofs made of glass according to the prior art; decrease in noise; elimination of the protective false roof.

In short, the object of the invention is a panel for assembly into an aperture in the roof of a vehicle so as to be capable of closing and opening the aperture, comprising
a double-glazed structure including external and internal sheets of transparent material confronting and spaced a predetermined distance from each other so as to define a gap therebetween, said internal and external sheets having substantially the same outer perimeter;
whereby
of said internal and external sheets, only said internal sheet have assembly holes therethrough;
a continuous adhesive bead is in contact with said external and internal sheets and extends along the edge of said double-glazed structure, said bead delimiting the gap of said double-glazed structure, said bead holding said sheets together and said bead spacing said sheets by said predetermined distance, said assembly holes being provided on the opposite side of said bead with respect to said gap;
mechanical assembly elements extend through said assembly holes and are mounted to said internal sheet for use in fixing the panel to the roof of the vehicle, whereby said mechanical elements will connect the internal sheet to the roof of the vehicle; and
a bead of sealing adhesive is in contact with said external and said internal sheets, said sealing adhesive being provided on the opposite side of said assembly holes with respect to said adhesive bead, and said sealing adhesive sealing said assembly elements extending between said sheets from the environment outside the double-glazed structure.

Further advantages and characteristics of the invention will be evident from the following description, given merely as a non-limiting example with reference to the accompanying drawings, in which:
figure 1 shows a top view of a sun roof according to the present invention;
figure 2 shows a cross-section view along line A-A of a sun roof according to the present invention;
figure 3 shows a cross-section view along line A-A of an alternative embodiment of the sun roof according to the present invention.

According to the present invention the drawings show a sun roof made of a double-glazing structure formed by a sheet of glass 1 held together with another sheet of glass 2, by means of a bead 3 which can be made, for example, of butyl rubber. As an example, the butyl rubber produced by the company CHEMETALL can be used, which is also capable of absorbing the humidity imprisoned in the air gap between the two sheets of glass, thanks to special absorbent elements present in the butyl mixture.

External sealing 4 of the sheet is performed using a polysulphide resin, for example M 82 also produced by CHEMETALL.

An opaque layer 9 is placed along the edge of the internal face of the external sheet 1, in such a way as to protect the beads of adhesive and/or sealant from ultraviolet rays, which could in the long term compromise their mechanical characteristics.

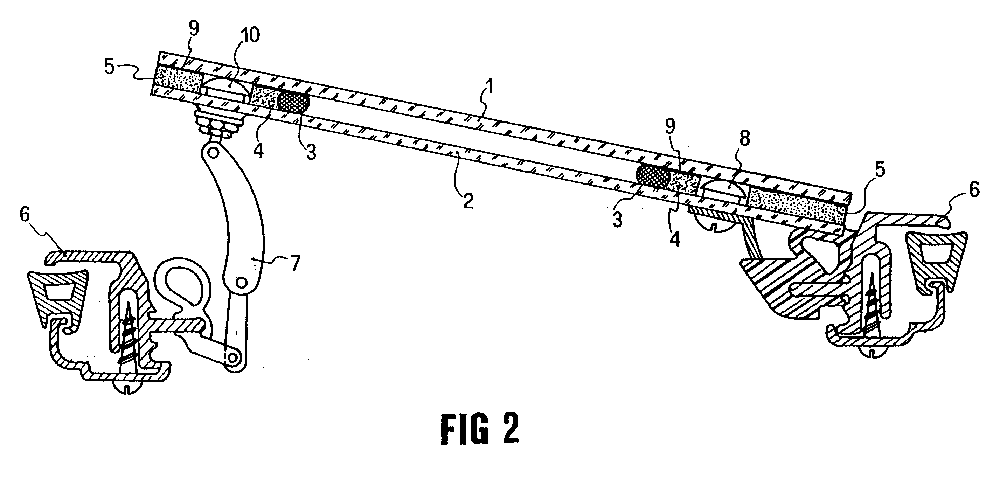

With reference to figure 2, the two sheets of glass 1 and 2 have the same shape and the same sized perimetral length.

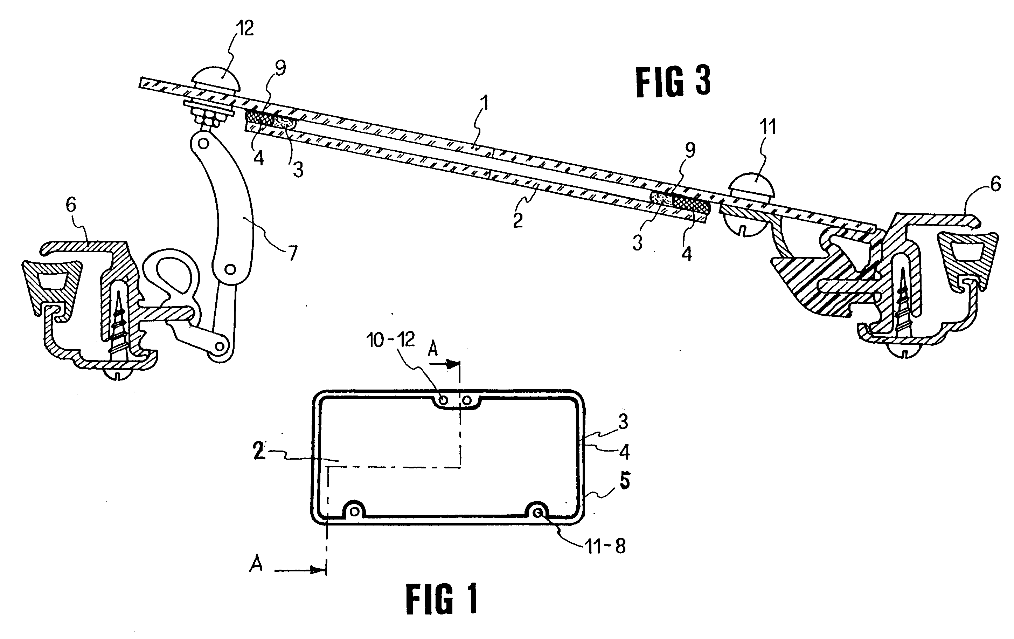

As can be seen from figure 1, the adhesive bead 3, 4 runs substantially along the edge of the sheets of glass, leaving to the outside with respect to the air gap the holes formed in the internal sheet, as illustrated in figure 2. These holes serve to insert the elements for assembly of the transparent panel to the structure of the roof of the automobile.

Screws 8 connect the sheet of glass 2 to hinges (not illustrated) for fixing to a support structure formed from a group of known structural elements and generally indicated with 6. Other screws 10 connect the sheet of glass 2 to the handle 7 which serves to raise the sun roof from the roof of the vehicle and to rotate it around the hinges (not illustrated), which can be of the type currently used.

A further bead of sealing adhesive 5 is used to seal the screws 8 and 10 from the outside.

This solution is particularly advantageous should it be desired to improve the air penetration coefficient of the vehicle, as there are no parts projecting on the outside, given that the screws 8, 10 are situated below the external sheet 1.

With reference to figure 3, which shows an alternative embodiment of the invention with respect to figure 2, the sun roof is formed by the assembly of two sheets of glass having the same shape but different sizes. In particular the internal sheet 2 is smaller than the external sheet. In this case, securing to the supporting structure is obtained by screws 11 which connect the external sheet only to the hinges (not illustrated) and by screws 12 which again connect the external sheet of glass to the handle 7.

This technical solution has the advantage that no significant modifications have to be made to the fixed structure of the opening, as the sun roof to be assembled there is a standard one.

The above description refers to a sun roof which is preferably hinged along one of its two long sides and is movable along the other long side. However, the same solutions can also be applied to horizontally movable or even completely removable sun roofs. Furthermore the same solutions can also be applied both to flat or curved sheets of glass.

In order to improve the comfort of sun roofs according to the present invention, the surfaces of one or both the sheets of glass giving onto the air gap can be coated with thin reflecting or low-emission layers obtained using physical or chemical deposition techniques. In the case of a double-glazing sunroof, it is possible to obtain, on the two inner surfaces of the air gap between the sheets of glass 1 and 2, two thin layers having different characteristics which, when combined, allow the desired thermal insulation values to be obtained. This has not been possible up to now using sunroofs made of a single layer of glass.

Furthermore, a neutral gas such as argon can be inserted into the air gap, thus increasing the thermal insulation characteristics and in particular reducing the value of the thermal transmission coefficient.

The following illustrates the results obtained by means of a double-glazing sunroof according to the present invention, when compared with the results obtained with a sunroof according to the prior art.

It is known from the prior art that the comfort obtained with a sunroof can be measured with the aid of certain coefficients. In particular comfort during the winter can be measured using the thermal transmission coefficient K expressed in W/m² °C, whereas summer comfort can be measured using the solar factor SF expressed in % of incident energy, while the ability to generate misting on the glass is measured using the relative humidity coefficient RH.

The best comfort is obtained in conditions where SF and K are low, and RH is high.

In the following table, given merely as an example, the following have been compared:
1) a sunroof comprising a single sheet of clear glass with a thickness of 3 mm coated with a thin reflecting layer;
2) a double-glazing sunroof comprising one sheet of clear glass with a thickness of 3 mm coated on the inside with a thin reflecting layer, an air gap interspace with a thickness of 3 mm, and another sheet of clear glass with a thickness of 3 mm;
3) a sunroof comprising one sheet of clear glass with a thickness of 3 mm coated on the inside with a thin reflecting layer, an air gap with a thickness of 3 mm, and another sheet of clear glass with a thickness of 3 mm coated with another thin reflecting layer.

The following values are the results of experimental tests, and refer to a sun roof and to a car in movement:

| | TL | TE | K W/m² °C | SF | RH |
|---|---|---|---|---|---|
| Glass 1 | 10% | 7% | 8.6 | 11% | 29% |
| Glass 2 | 9% | 6% | 4.6 | 8% | 53% |
| Glass 3 | 9% | 5% | 4.3 | 7% | 55% |

It can thus be seen that a sunroof made of a double-glazing greatly improves the internal comfort of a vehicle.

In addition to, or in alternative to the presence of thin reflecting layers, inks or opaque enamels can be applied to one of the surfaces of the two sheets, for example by means of silk-screen processes. In this case the designs obtained can be of various kinds, such as checks of varying fineness in which opaque squares or dots alternate with transparent squares or dots to form known geometrical figures, for example diamonds and the like.

## Claims

1. A panel for assembly into an aperture in the roof of a vehicle so as to be capable of closing and opening the aperture, comprising
a double-glazed structure including external (1) and internal (2) sheets of transparent material confronting and spaced a predetermined distance from each other so as to define a gap therebetween, said internal and external sheets having substantially the same outer perimeter;
whereby
of said internal and external sheets, only said internal sheet (2) have assembly holes therethrough;
a continuous adhesive bead (3) is in contact with said external and internal sheets and extends along the edge of said double-glazed structure, said bead delimiting the gap of said double-glazed structure, said bead holding said sheets together and said bead spacing said sheets by said predetermined distance, said assembly holes being provided on the opposite side of said bead (3) with respect to said gap;
mechanical assembly elements (8, 10) extend through said assembly holes and are mounted to said internal sheet (2) for use in fixing the panel to the roof of the vehicle, whereby said mechanical elements will connect the internal sheet (2) to the roof of the vehicle; and
a bead of sealing adhesive (5) is in contact with said external and said internal sheets, said sealing adhesive (5) being provided on the opposite side of said assembly holes with respect to said adhesive bead (3), and said sealing adhesive (5) sealing said assembly elements (8, 10) extending between said sheets from the environment outside the double-glazed structure.

2. A panel according to claim 1, wherein said adhesive bead (3) comprises an absorbent capable of absorbing humidity in said gap.

3. A panel according to claim 1 or 2, further comprising a seal (4) in the form of a bead contiguous with said adhesive bead (3) and interposed between said sheets.

4. A panel according to claim 3, wherein said adhesive bead (3) is of butyl rubber and said seal (4) is of a polysulphide resin.

5. A panel according to anyone of the preceding claims, wherein said mechanical elements (8, 10) comprise nuts and bolts.

6. A panel according to anyone of the preceding claims, further comprising an opaque layer (9) extending on the inner surface of said external sheet above said adhesive bead (3, 4), and said seal (5), so as to protect said bead and said seal from ultraviolet rays.

## Patentansprüche

1. Ein Deckel zum Einbau in einer Öffnung in dem Dach eines Fahrzeuges, so daß er die Öffnung schließen und öffnen kann, umfassend
eine doppeltverglaste Struktur einschließlich einer äußeren (1) und eines Inneren (2) Platte aus einem transparenten Material, die einander gegenüberliegen und eine vorbestimmte Strecke voneinander beabstandet sind, so daß dazwischen ein Zwischenraum begrenzt wird, wobei die genannte innere und äußere Platte im wesentlichen den gleichen Außenumfang haben; wobei
von der genannten inneren und äußeren Platte nur die genannte innnere Platte (2) Montagelöcher durch sie hindurch hat;
ein durchgehender Klebewulst (3) in Berührung mit der genannten äußeren und inneren Platte ist und sich entlang dem Rand der genannten doppeltverglasten Struktur erstreckt, wobei der genannte Wulst den Zwischenraum der genannten doppeltverglasten Struktur begrenzt, der genannte Wulst die genannten Platten zusammenhält und der genannte Wulst die genannten Platten mit dem vorbestimmten Abstand beabstandet, die genannten Montagelöcher auf der entgegengesetzten Seite des genannten Wulstes (3) in Bezug auf den genannten Zwischenraum vorgesehen sind;
sich mechanische Montageelemente (8,10) durch die genannten Montagelöcher erstrecken und an der genannten inneren Platte (2) zur Verwendung beim Befestigen des Deckels an dem Dach des Fahrzeugs angebracht sind, wodurch die genannten mechanischen Elemente die innere Platte (2) mit dem Dach des Fahrzeugs verbinden;
ein Wulst aus einem Abdichtungsklebemittel (5) in Berührung mit der genannten äußeren und der genannten inneren Platte ist, das genannte Abdichtungsklebemittel (5) auf der entgegengesetzten Seite der genannten Montagelöcher in Bezug auf den genannten Klebemittelwulst (3) vorgesehen sind und das genannte Abdichtungsklebemittel (5) die genannten Montageelemente (8,10), die sich zwischen den genannten Platten erstrecken gegenüber der Umgebung außerhalb der doppeltverglasten Struktur abdichten.

2. Ein Deckel gemäß Anspruch 1, worin der genannte Klebemittelwulst(3) ein Absorbierungsmittel umfasst, das Feuchtigkeit in dem genannten Zwischenraum absorbieren kann.

3. Ein Deckel gemäß Anspruch 1 oder 2, ferner umfassend eine Abdichtung (4) in Form eines an den genannten Klebemittelwulst (3) angrenzenden und zwischen den geannten Platten eingefügten Wulstes.

4. Ein Deckel gemäß Anspruch 3, worin der genannte Klebemittelwulst (3) aus Butylgummi ist und die genannte Abdichtung (4) aus einem Polysulphid-Kunstharz ist.

5. Ein Deckel gemäß irgendeinem der vorhergehenden Ansprüche, worin die genannten mechanischen Elemenete (8,10) Muttern und Bolzen umfassen.

6. Ein Deckel gemäß irgendeinem der vorhergehenden Ansprüche, ferner umfassend eine lichtundurchlässige Schicht(9), die sich auf der inneren Oberfläche der genannten äußeren Platte oberhalb des genannten Klebemittelwulstes (3,4) und der genannten Abdichtung (5) erstreckt, damit der genannte Wulst und die genannte Abdichtung gegen ultraviolette Strahlen geschützt werden.

## Revendications

1. Panneau pour l'assemblage dans une ouverture du toit d'un véhicule de façon à pouvoir ouvrir et fermer l'ouverture, comprenant :
une structure à double vitrage comportant des plaques externe (1) et interne (2) de matériau transparent en regard l'une de l'autre et espacées sur une distance prédéterminée de façon à définir un espace entre elles, ces plaques interne et externe ayant sensiblement le même périmètre extérieur ;
où
des plaques interne et externe, seule la plaque interne (2) présente des trous d'assemblage traversants ;
un cordon adhésif continu (3) est en contact avec les plaques externe et interne et s'étend le long du bord de la structure à double vitrage, ce cordon délimitant l'espace vide de la structure à double vitrage, ce cordon maintenant les plaques assemblées et espacées à une distance prédéterminée, ces trous d'assemblage étant ménagés sur le côté opposé du cordon (3) par rapport à l'espace libre ;
des éléments d'assemblage mécaniques (8, 10) s'étendent à travers ces trous d'assemblage et sont montés sur la plaque interne (2) pour l'utilisation de la fixation du panneau du toit du véhicule de sorte que les éléments mécaniques raccorderont la plaque interne (2) sur le toit du véhicule ;
un cordon de substance adhésive de scellement (5) est en contact avec les plaques externe et interne, cette substance adhésive de scellement (5) étant prévue sur le côté opposé des trous d'assemblage par rapport au cordon adhésif (3) et cette substance adhésive de scellement (5) rendant hermétiques les éléments d'assemblage (8, 10) s'étendant entre les plaques à partir de l'environnement à l'extérieur de la structure à double vitrage.

2. Panneau selon la revendication 1, dans lequel le cordon adhésif (3) comprend une substance absorbante capable d'absorber l'humidité dans cet espace libre.

3. Panneau selon la revendication 1 ou 2, comprenant de plus un joint d'étanchéité (4) sous forme d'un cordon contigu au cordon adhésif (3) et intercalé entre les plaques.

4. Panneau selon la revendication 3, dans lequel le cordon adhésif (3) est en caoutchouc butyle et le joint d'étanchéité (4) est en résine de polysulfure.

5. Panneau selon l'une quelconque des revendications précédentes, dans lequel les éléments mécaniques (8, 10) comprennent des écrous et des boulons.

6. Panneau selon l'une quelconque des revendications précédentes, comprenant de plus une couche opaque (9) s'étendant sur la surface interne de la plaque externe audessus du cordon adhésif (3, 4) et le joint d'étanchéité (5) de façon à protéger le cordon et le joint d'étanchéité des rayons ultraviolets.
